# EUROPEAN PATENT SPECIFICATION

(11) **EP 1 340 227 B1**
(45) Date of publication and mention of the grant of the patent: **16.02.2011**
(21) Application number: 00981871.7
(22) Date of filing: 22.11.2000
(51) Int. Cl.: G11B 27/32, G11B 27/10, H04N 9/804

(54) **METHOD FOR PROVIDING PROGRAM SPECIFIC INFORMATION RECORDED ON HIGH DENSITY DISC MEDIUM**
VERFAHREN ZUR BEREITSTELLUNG VON PROGRAMMSPEZIFISCHEN INFORMATIONEN, DIE AUF EINEM PLATTENMEDIUM MIT HOHER DICHTE AUFGEZEICHNET SIND
PROCEDE PERMETTANT DE PROCURER DES DONNEES SPECIFIQUES AU PROGRAMME ENREGISTREES SUR UN DISQUE HAUTE DENSITE

(43) Date of publication of application: 03.09.2003
(73) Proprietor: LG Electronics, Inc., Seoul 150-010 (KR)
(72) Inventor: SEO, Kang, Soo, Dongan-gu, Anyang, Kyunggi-do 431-075 (KR); KIM, Byung, Jin, Bundang-gu, Seongnam, Kyunggi-do 463-914 (KR); YOO, Jea, Yong, Kangnam-gu, Seoul 135-270 (KR); UM, Soung, Hyun, Anyang, Kyunggi-do 431-050 (KR)
(74) Representative: Trinks, Ole
(86) International application number: PCT/KR2000/001345
(87) International publication number: WO 2002/043066

(56) References cited:
- EP-A- 1 021 048
- EP-A- 1 033 875
- JP-A- 11 045 512
- JP-A- 2000 231 758
- JP-A- 2000 268 537

## Description

### 1. Technical Field

The present invention relates to method and apparatus of providing data stream read from an information recording medium such as a high-density digital versatile disc (HDVD) for a digital television set together with program specific information (PSI) which is requisite for digital data stream selecting, separating, and decoding of the digital television set.

### 2. Background Art

In these days, a digital television (TV) set developed for presenting high-quality pictures carried by a digital TV broadcast signal is gradually spread. The digital TV broadcast signal to be received by the digital TV set includes not only digital video and audio data but also intermittently inserted PSI to provide a variety of information about broadcast programs. The PSI is sometimes differently called PSIP (Program System Information Protocol).

The digital TV set selects a channel, separates and decodes digital stream of the chosen channel to pictures and sound with reference to the PSI received intermittently.

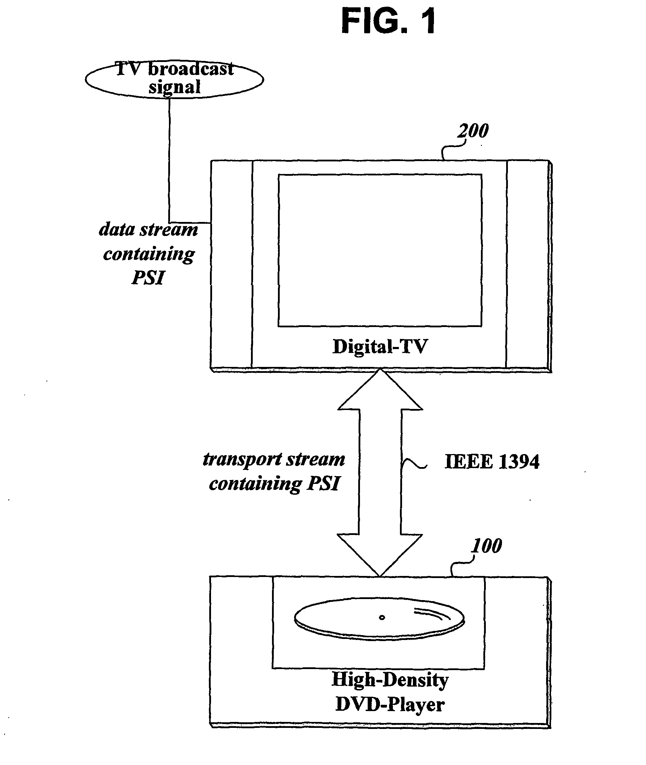

In the meantime, a high-density disk device, which is being developed to reproduce a HDVD whose recording standard is under discussion, is expected to be connected to a digital TV set through IEEE 1394 standard as shown Fig. 1. However, when receiving and presenting the data stream from the disk device 100, the digital TV set 200 still requires PSI to select the data stream and to control presentation of the selected data stream.

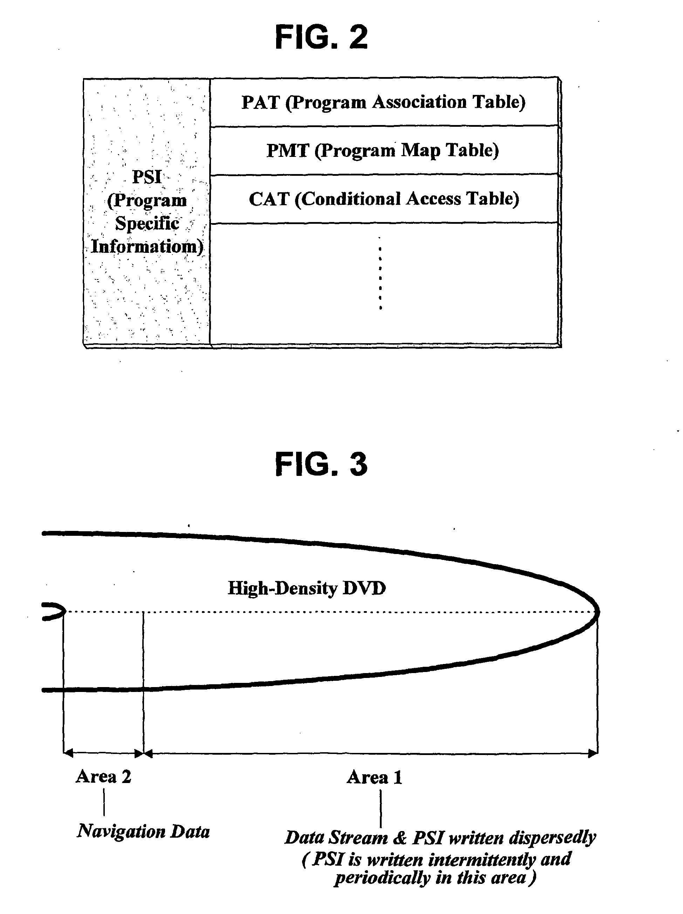

Therefore, when the disk device 100 reproduces MPEG-formatted data stream recorded on a HDVD and sends to the digital TV set 200 connected through a digital interface such as IEEE 1394 standard, it must provide PSI, which may consist of a program association table (PAT), a program map table (PMT), a conditional access table (CAT) and so forth, as shown in Fig.2, for the digital TV set 200 in the format of transport stream (TS) consisting of 188-byte-long transport packets (TPs).

To provide the digital TV set with PSI for recorded data stream intermittently or periodically as for a digital TV broadcast signal, it may be considered that PSI is recorded dispersedly and repeatedly in a data recording area 'AREA 1' of a HDVD as shown in Fig. 3 and the repeatedly written PSI is retrieved and transmitted sequentially along with data stream.

However, if PSI is recorded dispersedly and repeatedly on a data recording area of a disk, the recording area for real data, namely, video and/or audio data is greatly reduced, which causes to decrease recording efficiency of a disk.

In addition, the digital TV set can not present received data stream until it receives PSI retrieved in regular sequence from the PSI recorded dispersedly on the data recording area even though data receiving is resumed after a reproduction point is moved according to a key command of a user or a digital interface such as IEEE 1394 standard is reset. Because the digital TV set can not select data stream to decode to real pictures and/or sound until the PSI prepared for the data stream is received, there is inevitably discontinuity in video and/or audio or blank screen for a while.

In the meantime, the digital TV set determines when to decode and present received TPs based on PCRs (Program Clock References) included intermittently in the TPs. Thus, if PCRs are not continuous, there may occur errors in decoding and presenting received TPs. Accordingly, For preventing such possible malfunction, time information of PSI must be in continuity with PCRs included in consecutive TPs containing real data when PSI is converted to TPs and inserted into TS of real data.

Further prior art is known from EP 1 033 875 A2.

### 3. Disclosure of Invention

It is an object of the present invention to provide a PSI providing method enabling a connected digital TV set to present video pictures and/or sound stably.

It is another object of the present invention to provide a PSI recording method and a recording medium making it possible for a digital TV set to present video pictures and/or sound stably.

It is another object of the present invention to provide an information recording/reproducing apparatus enabling a connected digital TV set to present video pictures and/or sound stably.

Aspects of the present invention are defined in the appended claims.

Owing to the PSI providing method and apparatus in accordance with the present invention, a digital TV set can synchronize its local clock with time information written in received PSI TP or TPs and then decode and interpret PSI TPs after synchronization. Afterwards, it can separate and decode data stream TPs successively without missing any TP. Therefore, even though PSI is additionally provided for a digital TV set, time information written in successive TPs of PSI and data stream ensures continuity in time so that possible data loss which might be caused from time discontinuity is prevented radically.

### 4. Brief Description of Drawings

The accompanying drawings, which are included to provide a further understanding of the invention, illustrate the preferred embodiments of the invention, and together with the description, serve to explain the principles of the present invention.

In the drawings:
Fig. 1 shows a disk reproducing device and a digital TV set connected each other;
Fig. 2 shows several information elements constituting program specific information (PSI);
Fig. 3 shows partitioned recording areas of a disk recording medium and contents to be recorded thereon;
Fig. 4 shows partitioned recording areas of a disk recording medium and contents to be recorded thereon according to the present invention;
Fig. 5 shows PSI general information for managing generally all PSI concentrated on an area of a recording medium;
Fig. 6 is a block diagram of a disk device to conduct a method of providing data stream together with PSI in accordance with the present invention; and
Fig. 7 is an illustrative format of stream transmitted to a connected digital TV set.

### 5. Modes for Carrying out the Invention

In order that the invention may be fully understood, preferred embodiments thereof will now be described with reference to the accompanying drawings.

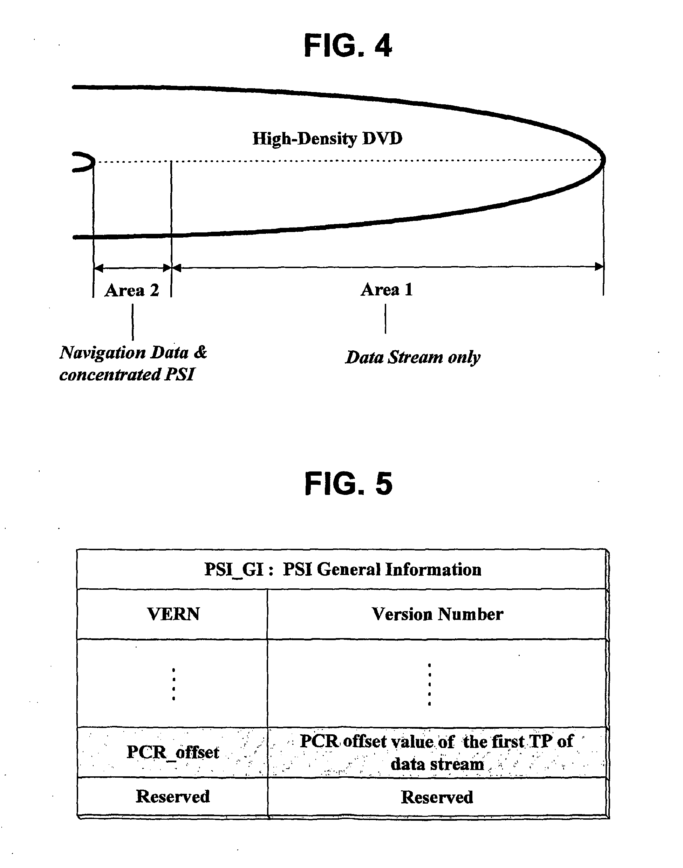

Fig. 4 is an area partitioned HDVD capable of supporting a PSI transmitting method in accordance with the present invention.

The HDVD of Fig. 4 has two recording areas 'AREA 1' and 'AREA 2', the one 'AREA 1' being for real data such as video and/or audio data which is unitized by stream object unit (SOBU), the other 'AREA 2' being for management information such as navigation data which is used for controlling reproduction and presentation of recorded SOBUs constituting a stream object (SOB) which is usually corresponding to a single program or digital stream section recorded continuously from recording start to stop.

As shown in Fig. 4, all of PSI, which will be provided for a digital TV set connected through a digital interface such as IEEE 1394 to select a data stream from a disk player and to decode the selected stream, is concentratedly written in the management information recording area 'AREA 2' without repetition, so that the storage capacity of the data recording area 'AREA 1' prepared for video and/or audio data is not decreased.

For recording all of PSI concentratedly, the following procedures are conducted sequentially.

First, PSI, which consists of PAT, PMT, CAT, and so on mentioned above referring to Fig. 2, inserted intermittently in a digital TV broadcast signal is detected and separated from the received digital TV broadcast signal. Each separated PSI is processed into a digital stream adequate to recording format of a writable HDVD and, at the same time, each separated PSI is compared with previously detected PSI to know whether the separated PSI is new, namely, the separated PSI contains data which is different from that of the previous PSI. If the separated PSI is new, it is sequentially written on the management information area 'AREA 2' of the writable HDVD.

When each PSI is written, each linking information between the written PSI and a SOB is created and appended to each written PSI. The linking information consists of start and end time of a corresponding SOB.

When each PSI is processed, control information for various presentation appropriate to a data stream provided from a recording medium may be added to PSI besides information of PAT, PMT, and CAT and some fields of PSI may be replaced for better presentation of recorded data stream other than broadcast data stream.

Fig. 5 shows PSI general information for managing generally all PSI written concentratedly on the area 'AREA 2' of a HDVD. As shown in Fig. 5, a PCR offset field marked 'PCR_offset' is added to the PSI general information. The PCR offset field shall be filled with time length of TPs each payload of which contains PSI, thus, the first TP belonging to PSI TPs has time information preceding a transport time (or PCR) of the first TP among data stream TPs, which will be transmitted after PSI TPs, by the time length written in the field 'PCR_offset'.

For example, if it is assumed that 500 is written in the PCR offset field, the first TP including partial PSI which will be followed by TPs of data stream has time information of a transport time 'TT1' (or PCR) of the first TP of data stream subtracted by 500, namely, 'TT1-500'. If PSI is to be transmitted twice prior to data stream transmission, the first TP of PSI transmitted first has time information of 'TT1-500x2' and the first TP of PSI transmitted second has 'TT1-500x1'. Generally speaking, if PSI is to be provided N times, then the first TP of PSI transmitted at M-th has time information of 'TT1-500x(N-M+1)'

Accordingly, the time information included in PSI TP or TPs is always in continuity in time with data stream TPs following the PSI TPs, so that a digital TV set can synchronize its local clock with time information written in a TP or some TPs of PSI received before data stream TPs, and then decode and interpret PSI TPs received after synchronization. Afterwards, it can separate and decode data stream TPs successively without missing any TP.

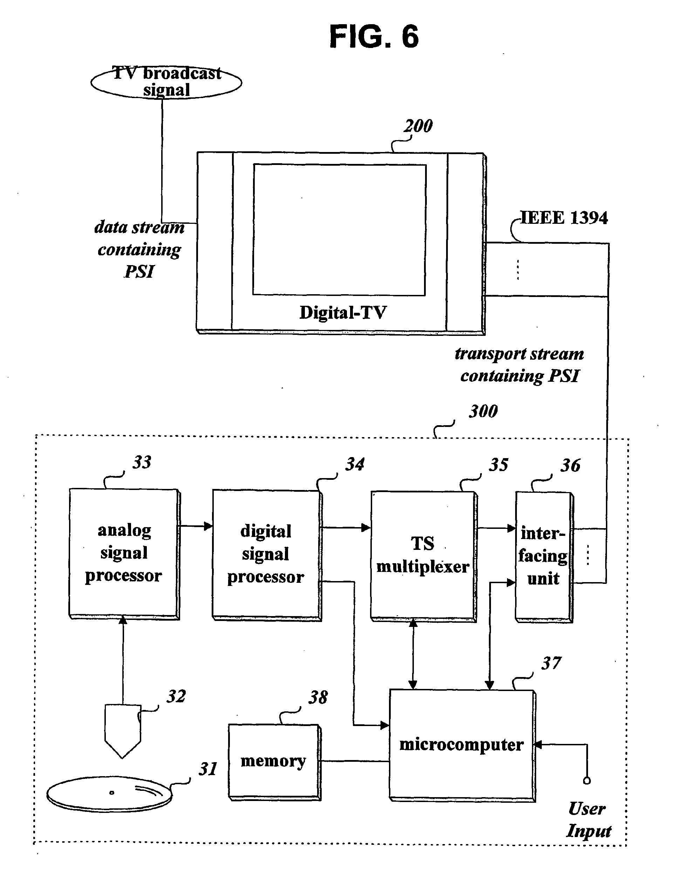

Fig. 6 is a block diagram of a disk device such as a HDVD player to conduct a method of providing data stream together with PSI in accordance with the present invention.

The disk device 300 shown in Fig. 6 comprises an optical pickup 32 detecting recorded signals of a HDVD 31 having PSI written in the area 'AREA 2' concentratedly; an analog signal processor 33 processing the electrical signal from the pickup 32 to convert it to a binary signal; a digital signal processor 34 processing the binary signal to obtain real data and PSI; a TS multiplexer 35 multiplexing the real data and PSI and converting the multiplexed data to TS; an interfacing unit 36 transmitting the TS to a digital television 200 connected through IEEE 1394 standard; a microcomputer 37 supervising the overall reproduction operation; and a memory 38 for storing temporary data produced during disk reproduction.

In the disk device 300 configured as Fig. 6, the microcomputer 37 conducts an operation to provide PSI, which is associated with the present data stream being reproduced, for the digital TV set 200. To do so, it reads the PSI first from the management information recording area 'AREA 2' when a key command is entered directly from a user, a packet command is received from the digital TV set 200 connected through IEEE 1394 standard, or there occurs a bus reset on the IEEE 1394. Then, the digital TV set 200 interprets the PSI received before data stream through the IEEE 1394 bus, and selects and decodes data stream based on the interpretation of the PSI. This briefly mentioned operation is explained below in detail

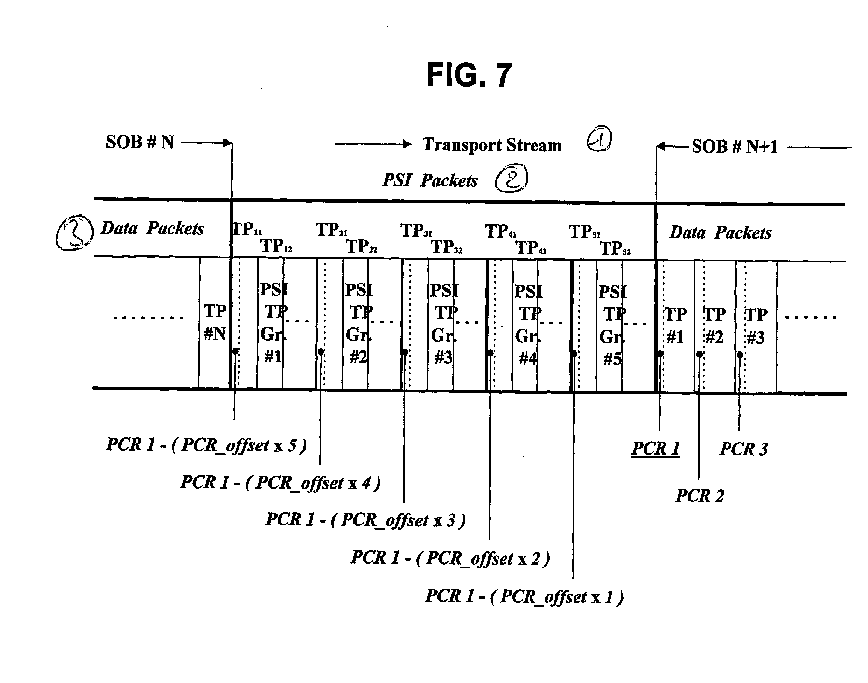

Fig. 7 is an illustrative format of stream transmitted to a connected digital TV set. To transmit PSI and data stream like as shown Fig. 7, the microcomputer 37 checks whether reproduced data is changed to next SOB during reproduction of the HDVD 31. If changed from the N-th SOB to the (N+1)-th, the microcomputer 37 reads out PSI associated with the (N+1)-th SOB from the area 'AREA 2' and applies the read PSI to the TS multiplexer 35 which converts the inputted PSI to a TP or several TPs (called 'TP Group') if needed. The TS multiplexer 35 will transmit the converted TP or TP Group before the first TP belonging to the (N+1)-th SOB under control of the microcomputer 37.

It is preferable to provide the PSI TP or TP Group repeatedly more than once to prevent possible errors in transmitting and/or receiving. The example of Fig. 7 is drawn for the case that PSI transmission before data stream is conducted five times and PSI is carried by a plurality of TPs, namely, a TP Group.

To transmit PSI five times, the microcomputer 37 reads the PCR offset field of the PSI general information and transport time information or PCR written in the first TP of the SOB # (N+1) , then, it calculates each time information for the first TP of each PSI TP Group using the read offset value and transport time (or PCR).

The five time information 'PCR1-(PCR_offset x 5)', 'PCR1-(PCR_offset x 4)', 'PCR1-(PCR_offset x 3)', 'PCR1-(PCR_offset x 2)', and PCR1-(PCR_offset x 1)' are obtained from the calculation of the microcomputer 37 if the transport time information or PCR written in the first TP of the SOB #(N+1) is 'PCR1'. The obtained five time information are written in the first TP of each PSI sequentially from the time 'PCR1-(PCR_offset x 5)'.

Because the same PSI is provided several times, even if the first and the second PSI are totally missed and an internal clock of the digital TV set is synchronized with the time information of the first TP of the third PSI, information about data stream can be obtained from interpretation of the successfully received TPs of the fourth and the fifth PSI. Therefore, the digital TV set can select data stream following the PSI TPs and separate and decode the selected data stream based on the interpretation of PSI.

Besides at the time when a reproduced program is changed, namely, next SOB starts to be reproduced, the PSI is also provided for the digital TV set before data stream in the following various cases where:
a) data stream is transmitted for the first time;
b) a long track jump in which reproduction position on a recording medium is largely changed is conducted at a request from user's key input;
c) a command is received by the microprocessor 37 of the disk device 300 through the digital interface when the digital TV set 200 connected with the disk device 300 through the IEEE 1394 standard is turned on or its channel is changed; and
d) the connecting interface between the disk device 300 and the digital TV set 200 is reset.

In the above embodiment of the present invention, a HDVD is used as a recording medium. However, the present invention is also applicable, without any modification and variation, to a video recording/reproducing apparatus of a magnetic recording medium on which video contents are recorded in digital data stream.

If a recording medium has not PSI unlike the aforementioned HDVD containing PSI, a reproducing apparatus may create PSI itself and transmit it to a digital TV set before reproduced data stream as explained above.

For example, if a disk inserted in the disk device of Fig. 6 is a conventional DVD having no PSI, the microcomputer 37 creates a TP or TPs of PSI, which may be referred for parsing digital data stream into video and audio stream, using basic PSI-related information pre-stored in the memory 38 and inserts time information, which is obtained from the above-explained time calculation method, in the PSI TP or TPs. The created PSI TPs including time information are provided for a connected digital TV set before reproduced data stream when data stream is transmitted for the first time or when a command related with an event that the connected digital TV set is turned on or its channel is changed is received.

## Claims

1. A method of providing program specific information (PSI) from a recording medium (31) or a reproducing apparatus for a connected device when transmitting data to the connected device in transport stream (TS) format, wherein the PSI consists at least of program association table (PAT), program map table (PMT), conditional access table (CAT) and
wherein the PSI is to be used for selecting, separating, and decoding of the transmitted data stream, comprising the steps of:
(a) reading data from a recording medium (31);
(b) transmitting at least one transport packet (TP) of the read data, **characterized by**
(c) checking whether reproduced data is changed to a next SOB during reproduction of the recording medium (31),
wherein a stream object (SOB) is a single program or digital stream section of the recording medium (31),
(d) if the reproduced data is changed to a next SOB during reproduction of the recording medium (31),
reading out PSI associated with the next SOB and converting PSI to a or several TPs and
transmitting the TP or TPs before the first TP belonging to the next SOB, wherein a time information written in successive TPs of PSI and data stream TPs following the PSI TPs ensures continuity in time
by the first TP belonging to PSI TP having time information preceding a transport time (or PCR) of the first TP among data stream TPs, which will be transmitted after PSI TPs, by the time length written in the field 'PCR_offset of the PSI.

2. The method of claim 1, wherein the changes from the N-th to the (N+1)-th SOB occurs in one of data reproducing position on the recording medium is changed, the connected device is turned on, a new stream object is transmitted after a stream object being reproduced is changed, a data bus carrying the data TPs to the connected device is reset, and a receiving channel of the connected device is changed.

3. The method of claim 1, wherein said step (d) comprises the steps of:
(d1) measuring time length of the PSI;
(d2) creating time information preceding a transport time of a first data TP by the measured time length;
(d3) adding the created time information to a TP converted from the PSI; and
(d4) transmitting the PSI TP including time information to the connected device before data TPs.

4. The method of claim 3, wherein the time length has been written in a management information area allocated for managing the PSI.

5. The method of at least one of the preceding claims, wherein said step (d) creates at least two TPs containing the PSI and transmits all created PSI TPs before the first TP containing data.

6. An apparatus of providing program specific information (PSI) for a connected device when reproducing data written on a recording medium (31),
wherein the PSI consists at least of program association table (PAT),
program map table (PMT), condition access table (CAT) and
wherein the PSI is to be used for selecting, separating, and decoding of the transmitted data stream, comprising:
a reading unit reading data recorded on the recording medium (31); and
a controlling unit transmitting at least one transport packet (TP) of the read data,
**characterized in that**
said controlling unit
checks whether reproduced data is changed to a next SOB during reproduction of the recording medium (31),
wherein a stream object (SOB) is a single program or digital stream section of the recording medium (31),
if the reproduced data is changed to a next SOB during reproduction of the recording medium (31),
reading out PSI associated with the next SOB and converting PSI to a or
several TPs and
transmitting the TP or TPs before the first TP belonging to the next SOB,
wherein the time information written in successive TPs of PSI and data stream TPs following the PSI TPs ensures continuity in time by the first TP belonging to PSI TP having time information preceding a transport time (or PCR) of the first TP among data stream TPs, which will be transmitted after PSI TPs, by the time length written in the field 'PCR_offset of the PSI.

7. The apparatus of claim 6, wherein said controlling unit creates the PSI TP based on information pre-recorded on the recording medium.

8. The apparatus of claims 6 or 7, wherein said controlling unit creates the PSI TP based on information pre-written on an information storage medium other than the recording medium.

## Patentansprüche

1. Verfahren zur Bereitstellung von programmspezifischen Informationen (PSI) von einem Aufzeichnungsmedium (31) oder einer Wiedergabevorrichtung für eine verbundene Vorrichtung, wenn Daten an die verbundene Vorrichtung im Transportstrom (TS)-Format übertragen werden, wobei die PSI mindestens aus einer Programmassoziationstabelle (Program Association Table, PAT), einer Programm-Maptabelle (Program Map Table, PMT), einer Tabelle für bedingten Zugang (Conditional Access Table, CAT) bestehen und wobei die PSI verwendet werden zum Auswählen, Trennen und Dekodieren des übertragenen Datenstromes, die Schritte aufweisend:
(a) Lesen von Daten von einem Aufzeichnungsmedium (31);
(b) Übertragen von mindestens einem Transportpaket (TP) der gelesenen Daten, **gekennzeichnet durch**
(c) Überprüfen, ob reproduzierte Daten in ein nächstes SOB geändert werden während der Reproduktion des Aufzeichnungsmediums (31),
wobei ein Streamobjekt (SOB) ein einzelnes Programm oder ein digitaler Streamabschnitt des Aufzeichnungsmediums (31) ist,
(d) wenn die reproduzierten Daten in ein nächstes SOB geändert werden während der Wiedergabe des Aufzeichnungsmediums (31),
Auslesen der PSI, welche dem nächsten SOB zugeordnet sind, und Umwandeln der PSI in ein oder mehrere TPs und
Übertragen des TP oder der TPs vor dem ersten TP, welches zum nächsten SOB gehört,
wobei eine Zeitinformation, welche in den aufeinander folgenden TPs der PSI und den Datenstrom-TPs, welche den PSI-TPs folgen, geschrieben ist, eine Zeitkontinuität sicherstellt **durch** das erste TP, welches zu dem PSI-TP gehört, welches die Zeitinformation hat, welche einer Transportzeit (oder PCR) des ersten TPs unter den Datenstrom-TPs vorausgeht, welche übertragen werden nach PSI-TPs **durch** die Zeitlänge, welche in dem Feld "PCR Offset" der PSI geschrieben ist.

2. Verfahren nach Anspruch 1, wobei die Änderungen vom N-ten zum (N+1)-ten SOB geändert werden an einer der Datenreproduktionspositionen auf dem Aufzeichnungsmedium auftreten, die verbundene Vorrichtung eingeschaltet wird, ein neues Streamobjekt (SOB) übermittelt wird, nachdem ein wiedergegebenes Streamobjekt geändert wurde, ein Datenbus, welcher die Daten-TPs zur verbundenen Vorrichtung trägt, zurückgesetzt wird, und ein Empfangskanal der verbundenen Vorrichtung geändert wird.

3. Verfahren nach Anspruch 1, wobei der Schritt (d) die Schritte aufweist:
(d1) Messen der Zeitlänge des PSI;
(d2) Erzeugen einer Zeitinformation, welche einer Transportzeit eines ersten Daten-TPs vorausgeht, durch die gemessene Zeitlänge;
(d3) Hinzufügen der erzeugten Zeitinformation zu einem aus dem PSI umgewandelten TP; und
(d4) Übertragen des PSI-TPs einschließlich Zeitinformation zur verbundenen Vorrichtung vor Daten-TPs.

4. Verfahren nach Anspruch 3, wobei die Zeitlänge in einen Managementinformationsbereich geschrieben wurde, welcher zur Verwaltung der PSI zugewiesen ist.

5. Verfahren nach mindestens einem der vorhergehenden Ansprüche, wobei der Schritt (d) mindestens zwei TPs erzeugt, welche die PSI enthalten, und alle erzeugten PSI-TPs vor dem ersten TP, welches Daten enthält, überträgt.

6. Vorrichtung zur Bereitstellung von programmspezifischen Informationen (PSI) für eine verbundene Vorrichtung, wenn Daten wiedergegeben werden, welche auf ein Aufzeichnungsmedium (31) geschrieben sind,
wobei die PSI mindestens aus einer Programmassoziationstabelle (Program Association Table, PAT), einer Programm-Maptabelle (Program Map Table, PMT), einer Tabelle für bedingten Zugang (Conditional Access Table, CAT) bestehen und
wobei die PSI verwendet werden sollen zum Auswählen, Trennen und Dekodieren des übertragenen Datenstromes, aufweisend:
eine Leseeinheit, welche Daten liest, welche auf dem Aufzeichnungsmedium (31) aufgezeichnet sind; und
eine Steuereinheit, welche mindestens ein Transportpaket (TP) der gelesenen Daten überträgt,
**dadurch gekennzeichnet,**
**dass** die Steuereinheit überprüft, ob wiedergegebene Daten in ein nächstes SOB geändert werden während der Wiedergabe des Aufzeichnungsmediums (31),
wobei ein Streamobjekt (SOB) ein einzelnes Programm oder ein digitaler Streamabschnitt des Aufzeichnungsmediums (31) ist,
wenn die reproduzierten Daten in ein nächstes SOB geändert werden während der Reproduktion des Aufzeichnungsmediums (31),
Auslesen der PSI, welche dem nächsten SOB zugeordnet sind, und Umwandeln der PSI in ein oder mehrere TPs und
Übertragen des TP oder der TPs vor dem ersten TP, welches zum nächsten SOB gehört,
wobei die Zeitinformation, welche in den aufeinander folgenden TPs der PSI und
den Datenstrom-TPs, welche den PSI-TPs folgen, geschrieben ist, eine Zeitkontinuität sicherstellt durch das erste TP, welches zu dem PSI-TP gehört,
welches die Zeitinformation hat, welche einer Transportzeit (oder PCR) des ersten TPs unter den Datenstrom-TPs vorausgeht, welche übertragen werden nach PSI-TPs durch die Zeitlänge, welche in dem Feld "PCR Offset" der PSI geschrieben ist.

7. Vorrichtung nach Anspruch 6, wobei die Steuereinheit das erste PSI-TP erzeugt, welches auf Informationen basiert, welche auf dem Aufzeichnungsmedium voraufgezeichnet sind.

8. Vorrichtung nach Anspruch 6 oder 7, wobei die Steuereinheit das PSI-TP erzeugt basierend auf Informationen, welche auf einem anderen Informationsspeichermedium als dem Aufzeichnungsmedium vor-geschrieben sind.

## Revendications

1. Procédé consistant à fournir des informations spécifiques à des programmes (PSI) à partir d'un support d'enregistrement (31) ou d'un appareil de reproduction destiné à un dispositif connecté lors de la transmission de données au dispositif connecté dans un format de flux de transport (TS), dans lequel les informations PSI sont constituées au moins d'une table d'association de programmes (PAT), d'une table de correspondance entre programmes (PMT), d'une table d'accès conditionnel (CAT), et dans lequel les informations PSI doivent être utilisées pour sélectionner, séparer et décoder le flux de données transmis, comprenant les étapes consistant à :
(a) lire des données depuis un support d'enregistrement (31) ;
(b) transmettre au moins un paquet de transport (TP) des données lues,
**caractérisé par** le fait de :
(c) vérifier si les données reproduites sont transformées en un SOB suivant pendant la reproduction du support d'enregistrement (31),
dans lequel un objet de flux (SOB) est un programme unique ou une section de flux numérique du support d'enregistrement (31),
(d) si les données reproduites sont transformées en un SOB suivant pendant la reproduction du support d'enregistrement (31),
lire les informations PSI associées au SOB suivant et convertir les informations PSI en un ou plusieurs TP et transmettre le ou les TP avant le premier TP appartenant au SOB suivant,
dans lequel des informations temporelles écrites dans des TP successifs des informations PSI et des TP du flux de données faisant suite aux TP des informations PSI garantissent la continuité dans le temps par le fait que le premier TP appartenant aux TP des informations PSI a des informations temporelles qui précèdent un instant de transport (ou PCR) du premier TP, parmi les TP du flux de données qui seront transmis après les TP des informations PSI, de l'intervalle de temps écrit dans le champ "PCR_offset" des informations PSI.

2. Procédé selon la revendication 1, dans lequel les passages du N-ème au (N+1)-ème SOB se produisent dans l'un des cas suivants : la position de reproduction de données sur le support d'enregistrement est modifiée, le dispositif connecté est mis sous tension, un nouvel objet de flux est transmis après qu'un objet de flux en cours de reproduction a été modifié, un bus de données transportant les TP de données vers le dispositif connecté est réinitialisé, et un canal de réception du dispositif connecté est modifié.

3. Procédé selon la revendication 1, dans lequel ladite étape (d) comprend les étapes consistant à :
(d1) mesurer l'intervalle de temps des informations PSI ;
(d2) créer des informations temporelles précédant un instant de transport d'un premier TP de données d'un temps égal à l'intervalle de temps mesuré ;
(d3) ajouter les informations temporelles créées à un TP converti à partir des informations PSI ; et
(d4) transmettre le TP des informations PSI contenant les informations temporelles au dispositif connecté avant des TP de données.

4. Procédé selon la revendication 3, dans lequel l'intervalle de temps a été écrit dans une zone d'informations de gestion allouée à la gestion des informations PSI.

5. Procédé selon au moins l'une des revendications précédentes, dans lequel ladite étape (d) crée au moins deux TP contenant les informations PSI et transmet tous les TP des informations PSI créés avant le premier TP contenant des données.

6. Appareil destiné à fournir des informations spécifiques à des programmes (PSI) destinées à un dispositif connecté lors de la reproduction de données écrites sur un support d'enregistrement (31),
dans lequel les informations PSI sont au moins constituées d'une table d'association de programmes (PAT), d'une table de mise en correspondance entre programmes (PMT), d'une table d'accès conditionnel (CAT), et
dans lequel les informations PSI doivent être utilisées pour sélectionner, séparer et décoder le flux de données transmis, comprenant :
une unité de lecture lisant des données enregistrées sur le support d'enregistrement (31) ; et
une unité de commande transmettant au moins un paquet de transport (TP) des données lues,
**caractérisé en ce que** :
ladite unité de commande effectue
la vérification du fait que les données reproduites passent ou non à un SOB suivant pendant la reproduction du support d'enregistrement (31),
dans lequel un objet de flux (SOB) est un programme unique ou une section de flux numérique du support d'enregistrement (31),
si les données reproduites passent à un SOB suivant pendant la reproduction du support d'enregistrement (31), la lecture d'informations PSI associées au SOB suivant et la conversion des informations PSI en un ou plusieurs TP et
la transmission du ou des TP avant le premier TP appartenant au SOB suivant,
dans lequel les informations temporelles écrites dans des TP successifs des informations PSI et les TP du flux de données faisant suite aux TP des informations PSI garantissent la continuité dans le temps par le fait que le premier TP appartenant aux TP des informations PSI contient des informations précédant un instant de transport (ou PCR) du premier TP, parmi les TP du flux de données qui seront transmis après les TP des informations PSI, d'un intervalle de temps écrit dans le champ "PCR_offset" des informations PSI.

7. Appareil selon la revendication 6, dans lequel ladite unité de commande crée le TP des informations PSI sur la base d'informations préenregistrées sur le support d'enregistrement.

8. Appareil selon la revendication 6 ou 7, dans lequel ladite unité de commande crée le TP des informations PSI sur la base d'informations préécrites sur un support de stockage autre que le support d'enregistrement.
